Europäisches Patentamt

European Patent Office

Office européen des brevets

(19)

(11) Numéro de publication : **0 091 362**
**B1**

(12) **FASCICULE DE BREVET EUROPÉEN**

(45) Date de publication du fascicule du brevet :
11.02.87

(51) Int. Cl.⁴ : **H 04 Q 11/04**

(21) Numéro de dépôt : **83400654.6**

(22) Date de dépôt : **29.03.83**

(54) **Central téléphonique numérique modulaire généralisé.**

(30) Priorité : **02.04.82 FR 8205786**

(43) Date de publication de la demande :
**12.10.83 Bulletin 83/41**

(45) Mention de la délivrance du brevet :
**11.02.87 Bulletin 87/07**

(84) Etats contractants désignés :
**BE DE GB IT NL SE**

(56) Documents cités :
**EP-A- 0 039 948**
**DE-A- 2 907 867**
**GB-A- 2 061 063**
**INTERNATIONAL SWITCHING SYMPOSIUM, Montréal, 21-25 septembre 1981, pages 1-6, session 34A, paper 1, CA., P. CHARRANSOL et al.: "Structure of a time division switching system for distributed control and linear growth capability"**
**COMMUTATION & TRANSMISSION, vol. 1, no. 1, septembre 1979, pages 103-112, Paris, FR., J.J. PERROT: "La gamme de commutation numérique temporelle MT de Thomson-CSF"**
**INTERNATIONAL SWITCHING SYMPOSIUM, Montréal, 21-25 septembre 1981, pages 1-7, session 32A, paper 2, CA., S. DAL MONTE et al.: "Proteo system - UT 10/3: a combined local and toll exchange"**
**INTERNATIONAL SWITCHING SYMPOSIUM, Montréal, 21-25 septembre 1981, pages 1-9, session 14A, paper 1, CA., M. BALLARD et al.: "the E10.S-TSS.5: a multipurpose digital switching system"**

(73) Titulaire : **THOMSON-CSF TELEPHONE**
**146, Boulevard de Valmy**
**F-92707 Colombes (FR)**

(72) Inventeur : **Charransol, Pierre**
**THOMSON-CSF SCPI 173 Bld. Haussmann**
**F-75379 Paris Cedex 08 (FR)**
Inventeur : **Athenes, Claude**
**THOMSON-CSF SCPI 173 Bld. Haussmann**
**F-75379 Paris Cedex 08 (FR)**
Inventeur : **Boussus, Yves**
**THOMSON-CSF SCPI 173 Bld. Haussmann**
**F-75379 Paris Cedex 08 (FR)**

(74) Mandataire : **Weinmiller, Jürgen et al**
**Lennéstrasse 9**
**D-8133 Feldafing (DE)**

## Description

La présente invention se rapporte à un central téléphonique numérique modulaire généralisé.

Pour qu'un central téléphonique numérique puisse être facilement adapté à différentes capacités et à divers cas d'utilisation, avec le minimum possible de modifications, il doit être modulaire. Les modules constituant ce central doivent être relativement petits et pratiquement tous identiques.

On connaît d'après le brevet français 79 10 805 et le brevet français 79 10 491 les éléments principaux des modules ou baies constituant un tel central téléphonique, et on connaît d'après la communication de MM. Hauri, Athènes, Salle et Raillard à l'ISS 1979, et la communication de MM. Athènes et Audrix à l'ISS 1981 les circuits intégrés spécifiques permettant de réaliser à faible coût ce central téléphonique. Chacune des baies de ce central est autonome et peut constituer un petit central téléphonique. Ce central téléphonique connu ne comporte pas de réseau de connexion centralisé comme c'est généralement le cas pour les autres centraux numériques connus, mais un réseau de connexion réparti entre toutes les baies l'objectif retenu pour la capacité d'un tel central téléphonique est de l'ordre de 10 000 lignes.

On connaît également, par l'article de J. J. Perrot « La gamme de commutation numérique temporelle MT de Thompson-CSF », revue Commutation et Transmission, vol. 1, septembre 1979, pp. 103 à 112, un central téléphonique numérique modulaire comportant plusieurs baies autocommutatrices autonomes réparties en plusieurs groupes constitués chacun par un certain nombre de ces baies reliées entre elles par des jonctions MIC à l'intérieur de chaque groupe.

Lorsque le nombre de groupes dépasse seize, ils doivent être reliés par une sélection de groupe SG, subdivisé en huit sous-branches qui permettent de relier entre eux les soixante quatre groupes par pas de quatre groupes. Une sous-branche est constituée par un réseau à deux étages de sélecteurs multiplexés dans le temps. Cet article ne donne pas d'autre indication sur la constitution des sous-branches, et il ressort de cet article que la modularité de la « sélection de groupe » est différente de celle des groupes.

La présente invention a pour but un central téléphonique numérique modulaire dont la capacité puisse être facilement et graduellement étendue jusqu'à plus de 120 000 lignes, et ce, en utilisant au maximum des circuits existants.

Ce but est atteint selon l'invention par le central tel que caractérisé par la revendication 1. En ce qui concerne des perfectionnements de l'invention, référence est faite aux revendications dépendantes.

La présente invention sera mieux comprise à la lecture de la description détaillée d'un mode de réalisation pris comme exemple non limitatif et illustré par le dessin annexé sur lequel :

la figure 1 est un bloc-diagramme simplifié d'une baie, connue en soi, faisant partie du central de l'invention ;

la figure 2 est le bloc-diagramme d'un groupe de baies reliées en point à point conformément à l'invention ;

la figure 3 est le bloc-diagramme simplifié d'un central téléphonique conforme à l'invention ;

la figure 4 est un bloc-diagramme d'une unité de sélection de groupe conforme à l'invention, avec le groupe de baies dont elle fait partie ;

la figure 5 est un bloc-diagramme d'une matrice de connexion utilisée dans l'unité de sélection de groupe de l'invention ;

la figure 6 est un bloc-diagramme simplifié des alvéoles d'unité centrale et d'unité de sélection de groupe à circuits de commutation de signalisation et de parole de l'invention ;

la figure 7 est un bloc-diagramme simplifié d'une unité de maintenance pouvant coopérer avec le central de l'invention ; et

la figure 8 est un bloc-diagramme simplifié de deux groupes faisant partie du central de l'invention, pour expliquer le fonctionnement des moyens de sécurité de transmission.

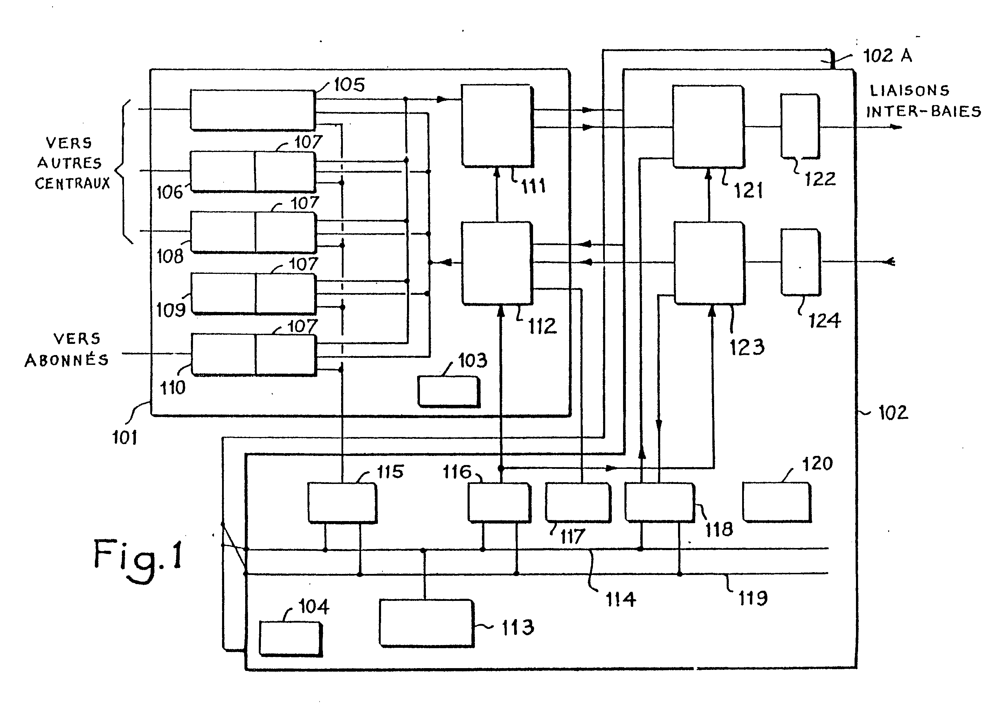

On a représenté, pour mémoire, sur la figure 1 le bloc-diagramme d'une baie quelconque faisant partie du central téléphonique de l'invention. Cette baie connue comporte deux sortes principales d'alvéoles : les alvéoles d'unités terminales 101, qui sont au nombre de six au maximum, et deux demi-alvéoles d'unité de traitement 102 et 102 A. Chaque alvéole comporte son propre circuit d'alimentation en énergie référencée 103 pour les alvéoles 101 et 104 pour le demi-alvéole 102.

Les alvéoles 101 comportent chacun : un joncteur MIC avec ses circuits de synchronisation référencé 105, un joncteur 64 kbits/s 106 suivi d'un circuit à codec et filtre 107, un joncteur basse fréquence 108 également suivi du circuit 107, un circuit émetteur-récepteur multifréquence 109 également suivi du circuit 107, un circuit terminal d'abonnés 110 également suivi du circuit 107. D'une part les circuits 105, d'autre part les circuits 106 et 108 avec leurs circuits 107 assurent la liaison avec d'autres centraux téléphoniques, et ne sont bien entendu présents que dans les baies assurant une telle liaison. Le circuit 110 est relié aux lignes d'abonnés correspondantes.

Le circuit de sortie du joncteur 105 et les circuits 107 sont reliés à un réseau de connexion sortant 111 et à un réseau de connexion entrant 112.

Le demi-alvéole 102 comprend une unité de traitement 113 (à calculateur numérique et mémoires de programme et de données) reliée à un bus 114 auquel sont reliés d'autre part : un organe central de signalisation à changement d'état 115, un marqueur 116, et un circuit 118 de mémorisation de canaux sémaphore décrit ci-dessous plus en détail. Le demi-alvéole 102 comprend également un circuit 117 de voies source (tonalités et films). Les éléments 115, 116 et 118 sont reliés d'autre part à un autre bus 119 qui n'est pas relié à l'unité de traitement 113, mais à l'unité de traitement correspondante du deuxième demi-alvéole d'unité de traitement 102 A identique au demi-alvéole 102. Les éléments de ce deuxième demi-alvéole, correspondant aux éléments 115, 116 et 118 sont donc reliés à deux bus dont l'un n'est relié qu'à l'unité de traitement de ce deuxième demi-alvéole, et dont l'autre n'est relié qu'à l'unité de traitement 113, ce qui forme un système dupliqué d'unités de traitement assurant la sécurité en cas de panne de l'une des deux unités de traitement.

Le demi-alvéole 102 comprend en outre un distributeur de temps 120 fournissant les signaux d'horloge pour tous les circuits de la baie. Le demi-alvéole 102 comprend également le demi-réseau de connexion 121 dont l'entrée est reliée aux sorties des différents réseaux 111 des alvéoles 101 de la même baie et dont la sortie est reliée *via* un circuit de synchronisation 122 et un faisceau de jonctions MIC aux entrées correspondantes des autres baies du central, et ce demi-alvéole 102 comprend le demi-réseau de connexion 123 dont la sortie est reliée aux entrées des différents réseaux 112 des alvéoles 101 de la même baie, et dont l'entrée est reliée *via* un circuit de synchronisation 124 aux sorties correspondantes des autres baies du central.

Le circuit 115 est relié aux circuits 107 et aux circuits 105 des différents alvéoles 101 de la même baie. Le marqueur 116 est relié aux réseaux de connexion 111 et 112 des différents alvéoles 101 et aux réseaux 121 et 123 du demi-alvéole 102. Le circuit 117 est relié aux réseaux 112 des différents alvéoles 101. Le circuit 118 est relié aux demi-réseaux 121 et 123.

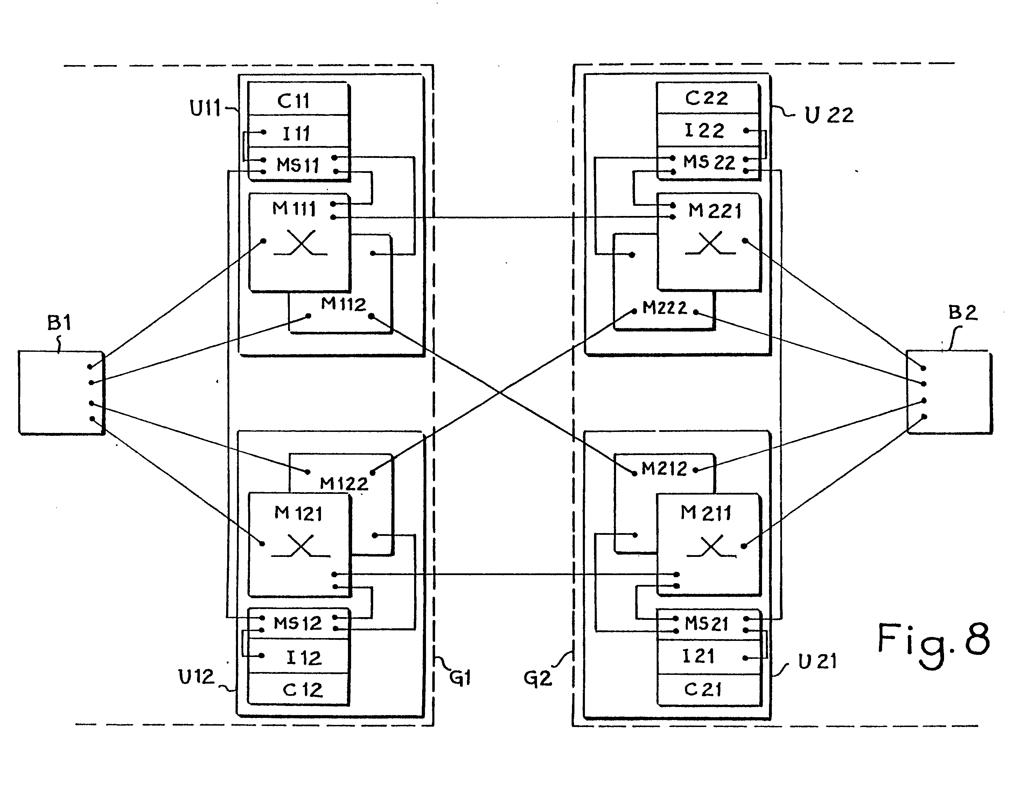

Les circuits de synchronisation 122, 124 et celui du joncteur 105 comportent les circuits intégrés MTC et MEH et deux transformateurs décrits dans les communications précitées ISS 1979 (figure 8 en particulier) et 1981, et fonctionnent de la façon décrite dans le brevet français 8 200 234. Les demi-réseaux 121 et 123 comportent chacun de une à trois matrices temporelles symétriques en fonction du trafic de la baie. Tous les réseaux de connexion de tous les alvéoles de toutes les baies forment le réseau de connexion réparti du central téléphonique.

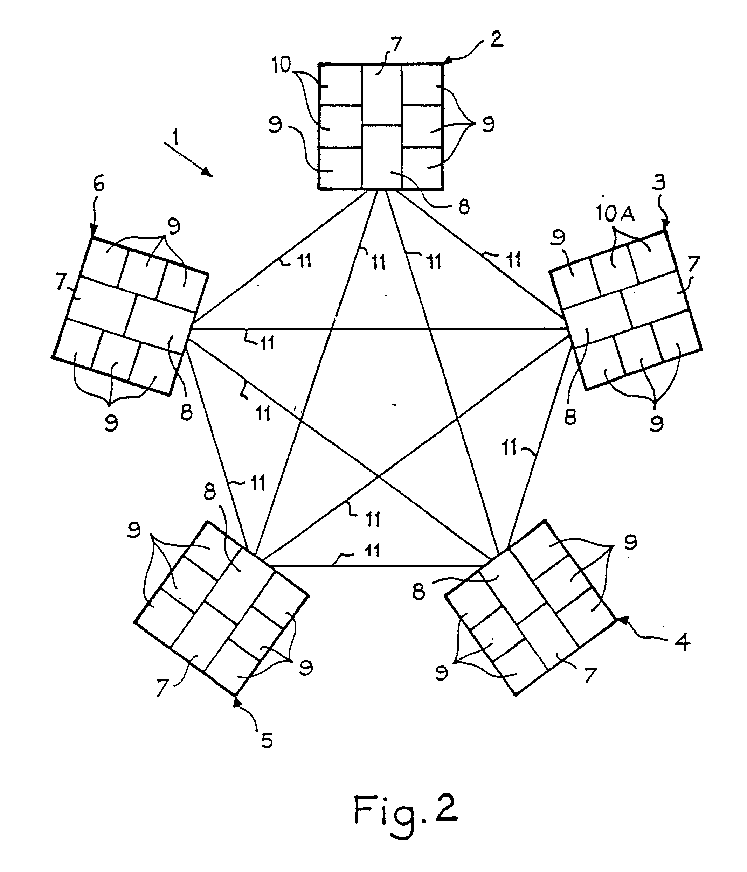

On a représenté sur la figure 2, de façon très simplifiée, un groupe 1 de cinq baies par exemple, référencées 2 à 6 respectivement. Chaque baie comporte essentiellement une unité de commande 7, un réseau réparti de connexion 8, sur lequel sont raccordés plusieurs alvéoles 9 de circuits d'abonnés, et d'autres circuits classiques (non représentés sur la figure 2). Selon un mode de réalisation préféré, le nombre d'alvéoles de circuits d'abonnés peut varier de un à six, chaque alvéole comportant les circuits nécessaires au raccordement de 256 abonnés. Toutefois, dans le cas où le central téléphonique est un central de transit, les alvéoles précités comportent les joncteurs appropriés. Dans le cas représenté sur la figure 2, chaque baie comporte six alvéoles référencés 9. Cependant, dans l'une des baies, par exemple dans la baie référencée 2, on remplace deux alvéoles 9 par deux alvéoles 10 comportant des circuits de commutation de signalisation et de parole formant une « unité de sélection de groupe » et décrits ci-dessous. Toutefois, il est bien entendu que les deux alvéoles 10 ont été disposés dans la baie 2 par simple commodité, et qu'ils auraient pu être disposés dans n'importe quelle autre baie du groupe ou même dans un chassis distinct situé à l'extérieur des baies. Les alvéoles 10 forment une entité fonctionnelle distincte de la baie dans laquelle ils sont implantés et à laquelle ils n'empruntent que les circuits d'alimentation en énergie. En outre, par mesure de sécurité, on prévoit dans le groupe 1 une deuxième unité de sélection de groupe, identique à la première, et composée de deux alvéoles 10A disposés, par précaution (en cas de panne des circuits d'alimentation en énergie de la baie 2) dans une autre baie, par exemple dans la baie 3. Dans le texte de la présente demande, on emploie le terme « parole » pour désigner toutes les informations (données, signaux vidéo, etc ...) pouvant être transmises par le central téléphonique.

Les baies 2 à 6 sont reliées en « point à point » par des jonctions MIC bidirectionnelles référencées 11, c'est-à-dire que n'importe quelle baie est reliée à chacune des autres baies par deux faisceaux de jonctions MIC bidirectionnelles. Dans le cas illustré sur la figure 2, quatre jonctions MIC bidirectionnelles partent de chaque baie, et, au total, le groupe 1 comporte au moins dix jonctions doublées MIC référencées 11.

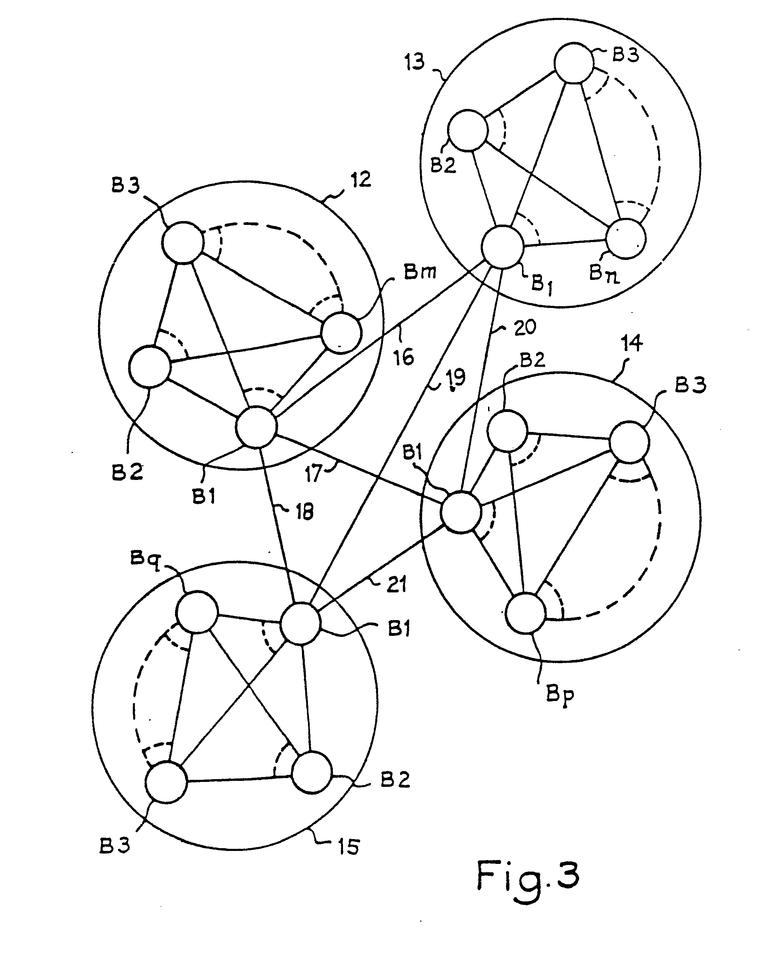

On a représenté sur la figure 3, de façon très simplifiée, un central téléphonique conforme à l'invention. Ce central comporte quatre groupes de baies référencés 12, 13, 14 et 15 respectivement, et similaires au groupe 1 de la figure 2. Les groupes 12, 13, 14 et 15 comportent respectivement m, n, p, q baies. Dans chacun de ces groupes, les baies sont référencées B1, B2, ... jusqu'à Bm, Bn, Bp et Bq respectivement. Pour simplifier, on suppose que les baies référencées B1 comportent les unités de sélection de groupe formées de circuits de commutation de signalisation et de parole. Toutefois, le central de l'invention n'est pas limité à quatre groupes, mais peut en comporter un plus grand nombre dont la valeur sera déterminée de la façon expliquée ci-dessous, en fonction du nombre de baies par groupe, et du nombre de groupes.

Toutes les baies de chaque groupe sont reliées entre elles en point à point par des jonctions MIC bidirectionnelles. Par conséquent, dans le cas où Bm = Bn = Bp = Bq = 8, sept faisceaux doublés de jonctions MIC bidirectionnelles partent de chaque baie vers chacune des autres baies du même groupe. Pour ne pas surcharger le dessin, on n'a pas représenté toutes ces jonctions MIC. En outre, les unités de sélection de groupe de toutes les baies B1 du central téléphonique sont reliées entre elles en point à point par au moins une jonction bidirectionnelle. Dans le mode de réalisation représenté sur le dessin, six jonctions MIC bidirectionnelles référencées 16 à 21 relient entre elles les unités de sélection de groupe des quatre baies B1 du central. Dans le cas où le central comporterait huit groupes, vingt-huit jonctions MIC relieraient entre elles les unités de sélection de groupe des huit baies B1 du central. On a représenté quelques jonctions MIC à l'intérieur des groupes, et seulement celles nécessaires à la compréhension de l'invention. Dans chacun des groupes 12 à 15, on a seulement représenté quatre baies, à savoir les trois premières baies B1, B2, B3, et la dernière baie Bm, Bn, Bp et Bq respectivement, étant entendu que chaque groupe comporte au moins quatre baies dans l'exemple représenté sur la figure 3.

Les signaux de signalisation et de parole entre baies de groupes différents transitent obligatoirement par les jonctions MIC reliant les unités de sélection de groupe des baies B1 correspondantes.

A l'intérieur d'un groupe de baies, la signalisation est échangée, entre deux baies quelconques, sur un intervalle de temps déterminé de la trame temporelle véhiculée dans chaque sens par la jonction MIC bidirectionnelle reliant ces deux baies. Pour utiliser de façon rationnelle les circuits existants, cet intervalle de temps est avantageusement l'intervalle de temps n° 16. Bien entendu, n'importe quel autre intervalle de temps d'une trame peut convenir, sauf l'intervalle de temps n° 0 qui est réservé au code de verrouillage de trame. Afin de simplifier la réalisation du central, à l'intérieur de chacun des groupes 12 à 15, les signaux de signalisation sont portés par le même intervalle de temps pour l'ensemble du central.

L'échange de signalisation entre deux baies appartenant à deux groupes différents passe obligatoirement, comme précisé ci-dessus, par l'unité de sélection de groupe de chaque groupe en question et utilise un autre intervalle de temps que celui déjà utilisé pour les échanges de signalisation à l'intérieur d'un même groupe. On peut par exemple utiliser l'intervalle de temps n° 5 à cet effet, et c'est le mode de réalisation utilisant cet intervalle de temps qui est décrit ci-dessous.

Ainsi, dans un même groupe, par exemple le groupe 12, sur les jonctions MIC entre les baies B2, B3 et Bm par exemple, seuls les intervalles de temps n° 16 servent à des échanges de signalisation. Par contre, sur toutes les jonctions MIC reliant l'unité de sélection de groupe implantée dans la baie B1 aux baies de ce groupe, l'intervalle de temps n° 5 est utilisé pour les échanges de signalisation entre les baies de ce groupe 12 et des baies d'autres groupes, l'unité de sélection de groupe de la baie B1 servant alors de « relais ». Sur les jonctions 16 à 21, seuls les intervalles de temps n° 5 sont utilisés pour les échanges de signalisation. Ainsi lorsqu'une première baie d'un groupe veut échanger de la signalisation avec une seconde baie faisant partie d'un autre groupe, la signalisation est véhiculée sur l'intervalle de temps n° 5 de la jonction MIC reliant cette première baie à l'unité de sélection de groupe de son groupe, puis cette signalisation est réémise sur l'intervalle de temps n° 5, après analyse, sur la jonction MIC reliant cette unité à l'unité de sélection de groupe choisie dudit autre groupe, puis est réémise encore une fois sur l'intervalle de temps n° 5 de la jonction MIC reliant cette dernière unité à ladite seconde baie choisie.

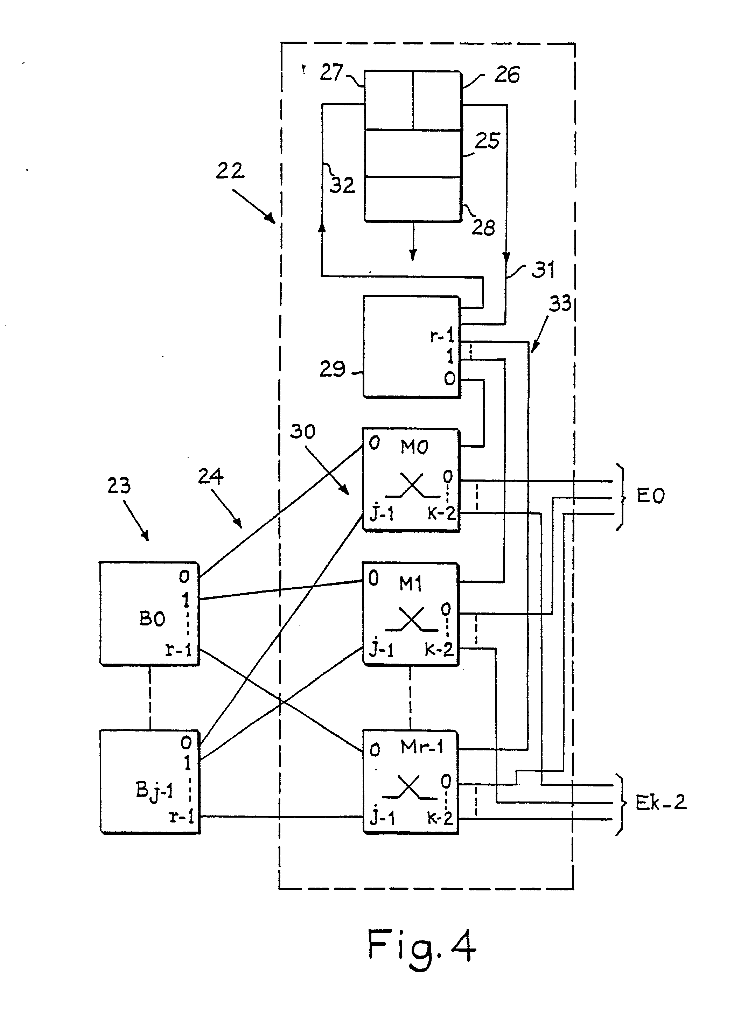

On va maintenant décrire, en référence à la figure 4, une unité 22 de sélection de groupe. Cette unité 22 est constituée par les deux alvéoles 10 de la figure 2 et peut être disposée dans l'une des baies d'un groupe 23 de baies auquel elle appartient. Le groupe 23 comporte j baies référencées B0 à Bj — 1, reliées par un ensemble 24 de jonctions MIC bidirectionnelles à l'unité 22.

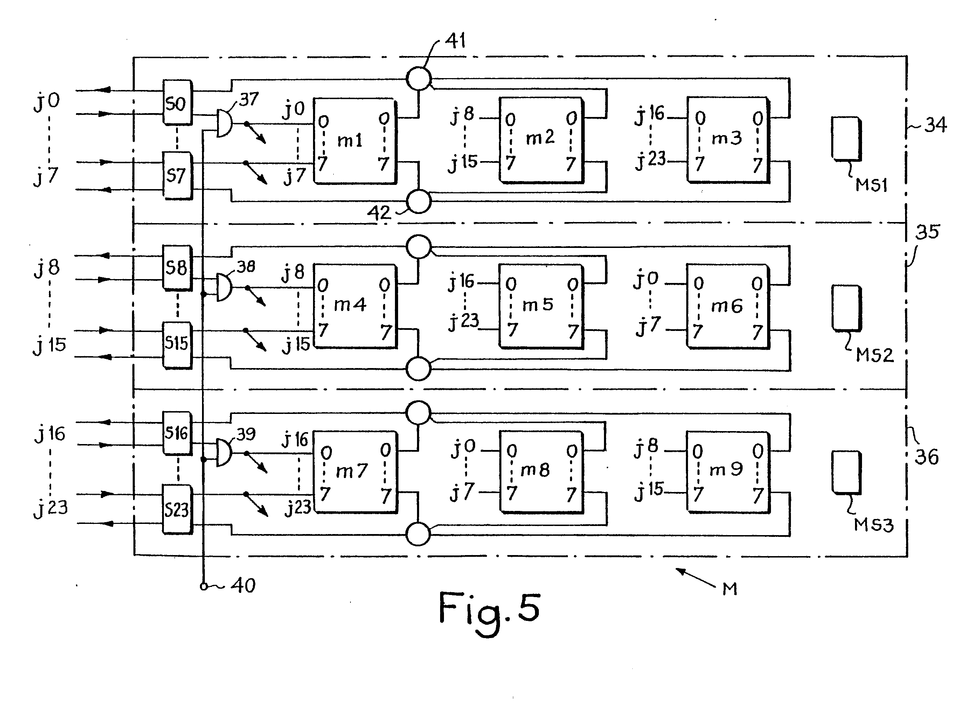

L'unité 22 comporte un circuit 25 de commutation de signalisation, une interface de sortie 26 et une interface d'entrée 27, un marqueur 28, une matrice de signalisation 29 et un ensemble 30 de r matrices de commutation identiques M0 à Mr — 1 le nombre r dépend du trafic sortant du groupe de baies considéré, du type décrit ci-dessous en référence à la figure 5.

La matrice de signalisation 29 est bidirectionnelle et composée d'une ou plusieurs matrices temporelles symétriques élémentaires (du type décrit en mars 1978 par MM. Charransol, Hauri, et Athenes au séminaire international de Zurich sur la commutation numérique, ainsi que dans la susdite communication à l'ISS de 1979) suivant le nombre r de matrices du groupe 30. La structure de cette matrice 29, lorsqu'elle se compose de plusieurs matrices temporelles symétriques élémentaires, se déduit de façon évidente pour l'homme de l'art à la lecture de la description de la matrice de commutation de la figure 5.

Une entrée de la matrice 29 est reliée par une jonction 31 à l'interface 26, et une sortie correspondante de la matrice 29 est reliée par une jonction 32 à l'interface 27. Toutes les autres liaisons représentées sur la figure 4 sont des jonctions bidirectionnelles. Les r autres entrées et sorties utilisées de la matrice 29 sont reliées par des jonctions bidirectionnelles 33 à une sortie et une entrée de chacune des matrices M0 à Mr — 1. Dans un mode de réalisation avantageuse, décrit en détail ci-dessous en référence à la figure 8, on prévoit une liaison supplémentaire entre la matrice 29 et une matrice de signalisation homologue d'une autre unité de sélection de groupe relative au même groupe. Les jonctions bidirectionnelles 24 relient r entrées et sorties de chacune des baies B0 à Bj — 1 à j entrées et sorties correspondantes de chacune des r matrices M0 à Mr — 1. En supposant que k soit le nombre total de groupes du central, ces groupes étant des groupes de baies d'abonnés et/ou de joncteurs, y compris, le cas échéant, le « groupe » unité d'exploitation et de maintenance décrit ci-dessous, k — 1 entrées et sorties de chacune des r matrices M0 à Mr — 1 sont reliées par k — 1 ensembles de r jonctions MIC bidirectionnelles, respectivement référencés E0 à Ek — 2, à des sorties et entrées homologues de chacune des r matrices correspondantes des k — 1 autres groupes du central. Les valeurs de j et k sont telles que la somme j + k + 1 est égale ou inférieure à la capacité en jonctions bidirectionnelles de chacune des matrices 30, le chiffre 1 correspondant à la liaison bidirectionnelle vers la matrice 29. Dans le mode de réalisation préféré décrit ici, la capacité de ces matrices est de 24 jonctions bidirectionnelles. Si l'on prend par exemple j = 8, on a k = 15 et le central pourra comporter jusqu'à 120 baies, c'est-à-dire environ 120 000 lignes d'abonné.

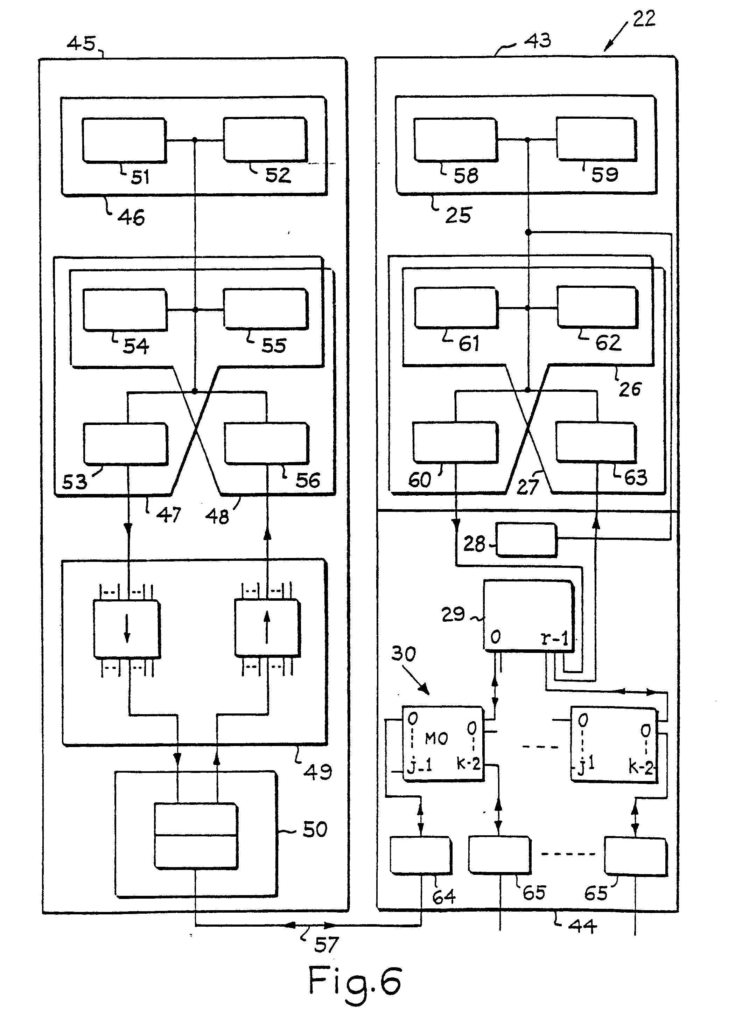

Les circuits 25, 26 et 27 sont décrits plus en détail ci-dessous en référence à la figure 6. On notera ici seulement qu'ils comportent des calculateurs numériques. Le logiciel du circuit 25 est prévu pour lui permettre de transférer, sans en modifier le contenu, des signaux de signalisation se présentant à des instants quelconques sur des intervalles de temps de la jonction 32 vers des intervalles de temps analogues de la jonction 31.

On notera que lorsqu'une unité de sélection de groupe ne comporte qu'une seule matrice 30, la matrice 29 est inutile, mais peut toutefois être conservée dans un but de standardisation. Lorsqu'il y a plusieurs matrices 30, il y a obligatoirement une matrice 29 reliée à l'ensemble des matrices 30.

Les intervalles de temps de signalisation regroupés sur la jonction 32 ont des contenus qui proviennent aussi bien des intervalles de temps n° 5 envoyés par les baies de l'ensemble 23 à destination de baies d'autres groupes, que des intervalles de temps n° 5 provenant des baies d'autres groupes à destination de baies de l'ensemble 23 et portés par les jonctions MIC correspondantes des ensembles E0 à Er — 1. En outre, les jonctions MIC bidirectionnelles de l'ensemble 24 et des ensembles E0 à Er — 1 véhiculent les informations (parole, données, ...) échangées par des baies de groupes différents.

On va maintenant décrire, en référence à la figure 5 une matrice M de commutation de l'ensemble 30. La matrice conforme à l'invention est une matrice de commutation bidirectionnelle qui peut commuter le contenu de 32 intervalles de temps de 8 × n jontions, sans blocage au sens strict, et ce en un seul étage de commutation, c'est-à-dire que la commutation ne prend au maximum qu'un temps égal à la durée d'une trame (125 microsecondes pour la téléphonie MIC-CEPT). La matrice représentée sur la figure 5 est reliée à vingt-quatre jonctions bidirectionnelles (entrantes et sortantes) référencées à j0 à j23.

La matrice M comporte neuf matrices temporelles symétriques élémentaires connues en soi (pour huit jonctions entrantes et huit jonctions sortantes) chacune référencée m1 à m9 et disposée en trois rangées de trois matrices chacune. Ces trois rangées sont respectivement référencées 34, 35 et 36 (de haut en bas sur le dessin) et comportent les matrices m1 à m3, m4 à m6 et m7 à m9 respectivement. Chacune de ces trois rangées peut avantageusement être disposée sur une carte de circuit imprimé standard. Chacune des trois rangées comporte un circuit dit « module de sélection logique » (décrit dans la communication faite à l'ISS de 1981 de Montréal par MM. C. Athènes et J. C. Audrix) coopérant avec les trois matrices élémentaires de la rangée correspondante. Ces trois modules sont respectivement référencés MS1, MS2 et MS3.

Chacune des trois rangées 34 à 36 est reliée à huit jonctions MIC bidirectionnelles, soit respectivement : j0 à J7, j8 à j15 et j16 à j23.

A cet effet, chaque rangée 34 à 36 comporte huit circuits de synchronisation bidirectionnels du type représenté à la figure 8 de la susdite communication à l'ISS de 1981 et fonctionnant de la façon expliquée dans la demande de brevet français n° 82 00 234. Les circuits de synchronisation reliés aux jonctions j0 à j23 sont respectivement référencés S0 à S23. On appelle côtés « amont » des circuits de synchronisation S0 à S23 leurs côtés reliés aux jonctions respectives et côtés « aval » leurs côtés reliés aux circuits de la matrice M.

La sortie aval des circuits S0, S8 et S16 est reliée à chaque fois à une première entrée d'un circuit ET à deux entrées référencées 37, 38 et 39 respectivement. La deuxième entrée de chacun de ces trois circuits ET est reliée à une borne commune 40 elle-même reliée à un générateur de signal (non représenté) produisant, de façon connue en soi, à partir des impulsions du signal de synchronisation de trame des jonctions (impulsions toutes les 125 microsecondes pour la téléphonie MIC-CEPT) un signal constamment égal à « 1 » avec des impulsions de valeur « 0 » ayant le même front avant que les impulsions du signal de synchronisation mais de durée égale à celle d'un octet, c'est-à-dire d'une durée égale à celle de l'intervalle de temps n° 0 des trames. Chacune des matrices m1 à M9 comporte huit entrées de rang 0 à 7 et huit sorties de rang 0 à 7. Ces rangs sont notés à l'intérieur des carrés symbolisant ces matrices. A l'extérieur de ces carrés, vis-à-vis de chaque entrée, on a noté les mêmes références que pour les jonctions reliées, *via* les circuits de synchronisation et éventuellement lesdits circuits ET, à ces entrées. Ainsi, on a marqué vis-à-vis des entrées de rang 0 à 7 des matrices m1, m6 et m8 les références j0 à J7 respectivement. Vis-à-vis des entrées de rang 0 à 7 des matrices m2, m4 et m9 on a marqué les références j8 à j15, et vis-à-vis des entrées de rang 0 à 7 des matrices m3, m5 et m7 on a marqué les références j16 à J23. On constate que les branchements des jonctions j0 à j23 peuvent être obtenus simplement par permutation circulaire d'une rangée à la suivante.

Les sorties des circuits 37 à 39 sont respectivement reliées aux entrées référencées j0 des matrices élémentaires m1, m6 et m8, aux entrées j8 des matrices m4, m9 et m2, et aux entrées j16 des matrices m7, m3 et m5.

Les sorties aval des circuits S1 à S7, S9 à S15 et S17 à S23 sont respectivement reliées (de façon non représentée pour la plupart, pour simplifier le dessin) aux entrées 1 à J7, j9 à J15 et j17 à J23 des matrices élémentaires m1 à m9.

Dans la rangée 34, l'entrée aval du circuit S0 est reliée à la sortie d'une porte OU à trois entrées, symbolisée par un simple cercle 41, dont une entrée est reliée à la sortie de rang 0 de la matrice m1, dont une autre entrée est reliée à la sortie de rang 0 de la matrice m2, et dont la troisième entrée est reliée à la sortie de rang 0 de la matrice m3. On procède de même pour les entrées aval de chacun des circuits S1 à S23. Pour simplifier le dessin, on n'a représenté que les portes OU relatives aux circuits S7, S8, S15, S16 et S23. Ainsi, par exemple, la porte OU 42 a sa sortie reliée à l'entrée aval du circuit S7, et ses trois entrées respectivement reliées aux sorties de rang 0 des matrices m1, m2 et m3.

On va maintenant expliquer le fonctionnement de la matrice M décrite ci-dessus. A l'arrivée du signal de trame, le signal sur la borne 40 inhibe les portes 37 à 39 pendant toute la durée de l'intervalle de temps 0. On dispose ainsi, pour les matrices de chacune des rangées 34 à 36 d'un intervalle de temps dont les huit éléments binaires sont nuls et qui sert à utiliser de façon décrite ci-dessous les résultats indésirables de deux des trois matrices de chaque rangée reliées, par l'intermédiaire des portes OU précitées, aux jonctions sortantes de la matrice M.

Supposons que l'on veuille commuter le contenu de l'intervalle de temps n° 3 de la jonction entrante j10 vers l'intervalle de temps n° 7 de la jonction sortante j5.

La jonction entrante j10 est reliée, à la sortie aval du circuit S10, aux entrées j10 des matrices m4, m9 et m2. La jonction sortante j5 est reliée aux sorties de rang 5 des matrices m1, m2 et m3. Pour que la commutation désirée puisse être réalisée, il faut et il suffit que l'on reçoive l'intervalle de temps n° 7 de la sortie de rang 5 de la matrice m2 qui est commune aux jonctions entrante et sortante précitées. A cet effet, on commande, de façon connue en soi, dans les matrices m1 et m3, la commutation du contenu (huit éléments binaires « 0 ») de l'intervalle de temps n° 0 de l'entrée de rang 0(j0) vers l'intervalle de temps de sortie n° 7 de la sortie de rang 5, et on commande dans la matrice m2 la commutation du contenu de l'intervalle de temps n° 3 de l'entrée de rang 2(j10) vers l'intervalle de temps de sortie n° 7 de la sortie de rang 5. De cette sorte, l'entrée aval du circuit S5 reçoit uniquement le contenu de l'intervalle de temps n° 7 depuis la sortie de la matrice m2 (les matrices m3 et m1 ne le modifient pas grâce aux portes OU reliées à leurs sorties). Par conséquent, on a bien commuté le contenu de l'intervalle de temps n° 3 de j10 entrante vers l'intervalle de temps n° 7 de j5 sortante. Par un raisonnement analogue, on peut facilement démontrer que l'on peut commuter le contenu de n'importe quel intervalle de temps de n'importe quelle jonction entrante vers n'importe quel autre intervalle de temps de n'importe quelle jonction sortante. On a donc réalisé une matrice de commutation symétrique à 24 jonctions entrantes et 24 jonctions sortantes, sans blocage au sens strict.

On peut facilement démontrer que si l'on veut augmenter la capacité de cette matrice, il faut ajouter une rangée supplémentaire et une matrice élémentaire dans chaque rangée par ensemble de huit jonctions supplémentaires traitées. Ainsi, pour une matrice à 48 jonctions entrantes et sortantes, il faudrait six rangées de six matrices élémentaires chacune, les raccordements des jonctions aux différentes matrices élémentaires se déduisant facilement, selon le processus de permutation circulaire précité, de la structure de la matrice (24 × 24). Bien entendu, il est également possible de réduire la matrice à une capacité de 16 jonctions entrantes et sortantes en n'utilisant que quatre matrices élémentaires.

On va maintenant décrire, en référence à la figure 6, les interfaces de mémorisation de canaux sémaphores associées à l'unité de traitement et au calculateur de commutation de signalisation et de parole disposés dans des alvéoles de deux baies d'un groupe. Comme précisé ci-dessus, chacun des deux alvéoles 43 et 44 d'une unité 22 est disposé à la place d'un alvéole de module terminal (alvéole comportant des circuits de ligne et/ou des joncteurs et une partie de réseau de connexion réparti). Les alvéoles 43 et 44 de l'unité de sélection de groupe comportent essentiellement les éléments respectivement référencés 25 à 27 et 28 à 30 sur la figure 4. En outre, l'alvéole 43 contenant les éléments de traitement 25 à 27, comporte avantageusement le même matériel de traitement que l'alvéole 45 de l'unité de traitement de chaque baie (éléments 46 à 48 correspondant respectivement aux éléments 25 à 27) seul leur logiciel est différent. Les autres baies du groupe ne comportent, outre les alvéoles de modules terminaux, qu'un alvéole d'unité de traitement identique à l'alvéole 45.

On a représenté sur la figure 6 le bloc-diagramme simplifié de l'alvéole 45 de l'unité de traitement et des alvéoles 43 et 44 de l'unité 22, ainsi que le réseau de connexion 49 et l'un des circuits de synchronisation 50 reliant le réseau de connexion 49 à l'une des matrices de l'alvéole 44. Le nombre de ces circuits de synchronisation est égal au nombre de liaisons sortant d'une baie du groupe considéré, mais pour la clarté du dessin, on n'en a représenté qu'un seul.

L'alvéole 45 comporte l'unité de traitement 46 et les interfaces 47 et 48. L'unité de traitement 46 comprend essentiellement un calculateur numérique 51 avec ses mémoires 52 de données et de programme.

L'interface 47 comprend essentiellement un circuit logique d'émission 53 commandé par un calculateur 54, de préférence identique au calculateur 51, associé à des mémoires 55 de données et de programme et tampon. Le calculateur 54 et les mémoires 55 coopèrent également avec un circuit logique de réception 56 en formant avec lui le circuit d'interface 48. Le réseau de connexion 49 comporte plusieurs matrices de commutation, de préférence des matrices temporelles symétriques branchées et commandées de façon connue en soi. Les circuits de synchronisation 50 assurent la liaison entre le réseau de connexion 49 et les différents faisceaux de jonctions MIC bidirectionnelles, telles que la jonction 57 (entre les alvéoles 45 et 44), reliant les différentes baies du groupe considéré en « point à point » comme représenté en figure 2. Ces circuits de synchronisation 50 permettent de synchroniser entre elles toutes les baies du central sans perte d'informations. Ces circuits de synchronisation sont identiques aux circuits 122, 124, et S0 à S23.

Le circuit de calcul 25 comporte essentiellement un calculateur 58 et des mémoires 59 de données et de programme. Le circuit d'interface 26 comporte un circuit logique d'émission 60 commandé par un calculateur 61, de préférence identique au calculateur 58, associé à des mémoires 62 de données et de programme et tampon. Ce calculateur 61 avec ses mémoires 62 coopère également avec un circuit logique de réception 63 en formant avec lui le circuit 27. Les entrées et sorties 0 à j — 1 des matrices M0 à Mr — 1 du groupe 30 de matrices sont reliées *via* des circuits de synchronisation, tels que le circuit 64 reliant par la jonction 57 la matrice m0 au réseau 49 de la baie dans laquelle elle est implantée. Les entrées et sorties 0 à k — 2 de ces mêmes matrices m0 à Mr — 1 sont reliées *via* des circuits de synchronisation 65 aux matrices homologues des autres unités de commutation de groupe du central. Les circuits de synchronisation 64 et 65 sont identiques aux circuits 50.

Les intervalles de temps n° 16, porteurs de signalisation intra-groupe, sont directement traités, de façon habituelle, par l'unité de traitement de chaque baie concernée. Toutes les baies comportent un alvéole à unité de traitement identique à l'alvéole 45 représenté sur la figure 6. Dans chaque groupe, par exemple les baies B1 et B4 comportent en plus deux alvéoles tels que les alvéoles 43 et 44 représentés sur la figure 6 (ces alvéoles prenant la place d'alvéoles de circuits terminaux). Dans la description qui suit, on se référera donc à la figure 6 qu'il s'agisse des baies B1 et B4 ou des autres baies.

L'alvéole d'unité de traitement 45 comporte en particulier une mémoire tampon (faisant partie de l'ensemble des mémoires 55) associée aux circuits d'interface 47 et 48. Cette mémoire tampon permet de stocker temporairement le contenu des intervalles de temps porteurs de signalisation véhiculés par les jonctions reliant le circuit 47 et le circuit 48 au réseau 49.

Dans les baies B1 et B4, l'aiguillage semi-permanent (cet aiguillage est établi lors de l'initialisation ou d'une ré-initialisation éventuelle de la baie) des intervalles de temps de signalisation inter-groupes n° 5 vers les circuits d'interface associés au circuit de commutation 25 *via* les matrices 30 est assurée par la matrice 29 sous la commande de l'unité de traitement 25 et le marqueur 28.

Les alvéoles 43 des unités de sélection de groupe comportent également, en particulier, une mémoire tampon dans le groupe de mémoires 62. Cette mémoire tampon assure le stockage des contenus des intervalles de temps de signalisation inter-groupes entrants (n° 5 avant les matrices 30), ainsi que des intervalles de temps sortants pour devenir des intervalles de temps n° 5 à la sortie des matrices 30. Cette mémoire 62 est accessible par les calculateurs 58 et 61, et par les circuits logiques d'émission et de réception 60 et 63.

Si l'on se réfère aux niveaux de traitement définis par la signalisation CCITT n° 7, à savoir les niveaux 4 (utilisateur), 3 (réseau), 2 (canal sémaphore) et 1 (support physique de transmission), ces niveaux sont respectivement traités de la façon suivante. Dans l'alvéole de l'unité de traitement : les niveaux 4 et 3 par le calculateur 51, le niveau 2 par le calculateur 54 des interfaces 47 et 48 et le niveau 1 par les circuits de synchronisation et les jonctions MIC correspondantes. Dans les alvéoles 43 et 44 : le niveau 3 par le calculateur 58, le niveau 2 par le calculateur 61 des interfaces 26 et 27, et le niveau 1 par les jonctions MIC correspondantes.

Bien entendu, pour des raisons de sécurité, on peut doubler le calculateur de l'unité de traitement, les deux calculateurs fonctionnant alors en microsynchronisme et étant associés chacun à ses deux propres circuits d'interface tels que les circuits 47 et 48 qui fonctionnent en partage de charge, ces deux ensembles de deux circuits d'interface étant branchés chacun sur le demi-réseau de connexion précité (voir figure 1).

Pour traiter chaque canal sémaphore, le circuit logique d'émission 53 ou 60 dispose de 3,9 microsecondes (téléphonie MIC-CEPT) toutes les 125 microsecondes, temps pendant lequel il réalise les fonctions suivantes : insertion de « 0 » de remplissage, création du drapeau, calcul du CRT (seize éléments binaires de contrôle de trame), lecture dans la mémoire tampon des octets de signalisation à émettre, émission continue de drapeaux, émission de TSR (trames sémaphores de remplissage s'il n'y a pas d'informations utiles à transmettre), émission de TSE (trames sémaphores d'état pour procéder à l'alignement initial) et de TSM (trames sémaphores de messages). En outre, le circuit logique de gestion (calculateur 54 ou 61) indique si le circuit logique d'émission fonctionne selon la méthode de base ou selon la méthode cyclique (définies par la signalisation CCITT n° 7). La méthode de base est celle qui est retenue pour l'ensemble de la signalisation interne du central dans l'exemple de réalisation préféré.

Pour traiter chaque canal sémaphore, le circuit logique de réception 56 ou 63 dispose de 3,9 microsecondes toutes les 125 microsecondes, temps pendant lequel il réalise les fonctions suivantes : extraction des « 0 » d'insertion, détection du drapeau, calcul du CRT et vérification globale du CRT en fin de trame, rangement des octets de signalisation incidents dans la mémoire tampon, reconnaissance du type des trames reçues (trame d'état, de remplissage ou de message), et échanges avec le circuit logique de gestion (calculateur 54 ou 61).

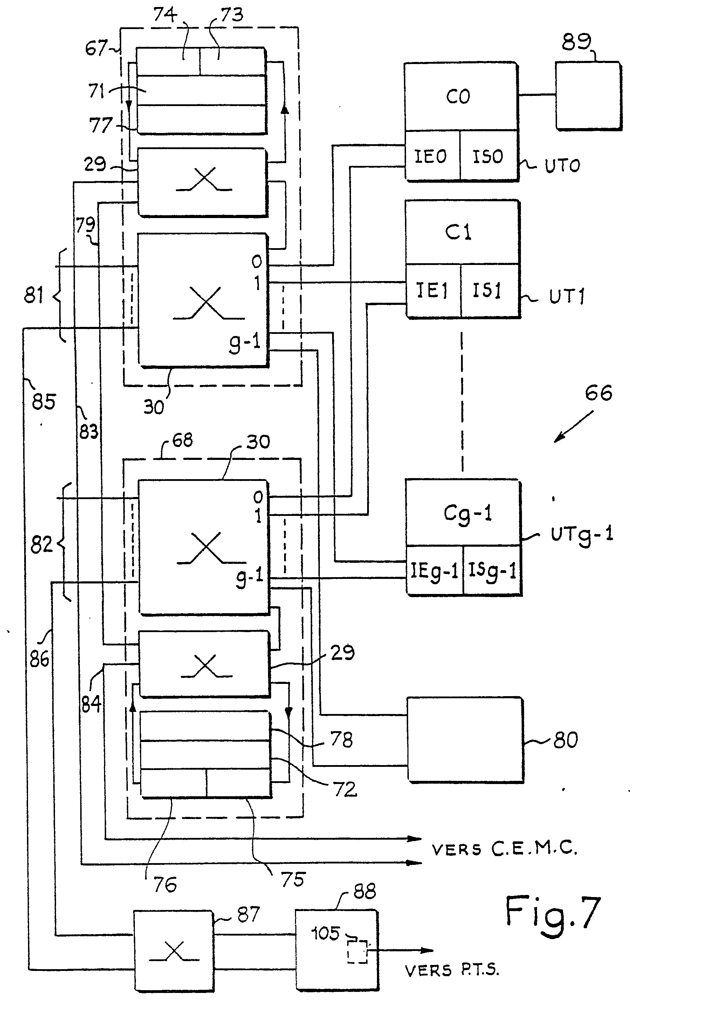

L'unité de maintenance et d'exploitation 66 du central téléphonique, représentée sur la figure 7 est considérée fonctionnellement comme un groupe de baies et comporte à ce titre une, ou de préférence deux unités de sélection de groupe 67, 68 identiques à l'unité 22, chacune de ces deux unités comportant en particulier les matrices 29 et 30. Dans un but de standardisation, les unités 67 et 68 sont réalisées comme les unités 22 des groupes de baies, seul un nombre des matrices 30 peut être différent, et éventuellement leur capacité.

Chacune des unités de sélection 67, 68 comporte en outre essentiellement les éléments suivants : un calculateur 71, 72, une interface d'entrée et une interface de sortie 73 et 74, 75 et 76, et un marqueur 77, 78, respectivement. Les matrices de signalisation 29 des unités de sélection 67 et 68 sont reliées entre elles par une jonction bidirectionnelle 79.

L'unité de maintenance 66 comporte en outre g unités de traitement dont le nombre dépend du nombre de fonctions que doit remplir l'unité de maintenance. Ces unités de traitement sont constituées de matériel identique, sont référencées UT0 à UTg — 1, et comportent chacune un calculateur C0 à Cg — 1, une interface d'entrée IE0 à IEg — 1 et une interface de sortie IS0 à ISg — 1, les calculateurs et interfaces étant constitués des mêmes éléments que les calculateurs et interfaces des unités de sélection de groupe. Chacune des unités de traitement UT0 à UTg — 1 est reliée par une jonction bidirectionnelle à chacune des matrices 30.

L'unité de maintenance comporte également un circuit 80 de voies sources connu en soi relié par jonctions bidirectionnelles à chacune des matrices 30.

Les matrices 30 sont reliées chacune par un ensemble de k jonctions bidirectionnelles, ensembles respectivement référencés 81, 82, aux deux unités de sélection de groupe de chacun des k groupes de baies d'abonnés et joncteurs du central. Les matrices de signalisation 29 sont également reliées chacune par une jonction MIC bidirectionnelle, 83, 84 respectivement, à un centre d'exploitation et de maintenance centralisées (C. E. M. C. — extérieur au central et non représenté). Si nécessaire, la liaison vers le C. E. M. C. comporte un adaptateur de débit, à 64 kbits/s par exemple.

Parmi les k — 1 liaisons bidirectionnelles 81, 82 entre les matrices 30 et les unités de sélection de groupe des k groupes du central téléphonique, on a représenté à part, sur la figure 7, les deux liaisons 85, 86 à l'une quelconque (87) des unités de sélection de groupe, ainsi que l'une quelconque (88) des baies de son groupe. Le joncteur 105 (voir figure 1) de cette baie 88 est relié à un point de transfert de signalisation (P. T. S. — non représenté) extérieur au central considéré, ce P. T. S. étant lui-même relié d'autre part à un ou plusieurs autres centraux. Le central considéré peut ainsi échanger de la signalisation, et des données avec d'autres centraux.

Les fonctions maintenance et exploitation étant bien connues en soi, on expliquera ici seulement quels sont les différents éléments assurant les différents aspects de ces fonctions.

L'une des unités de traitement au moins, par exemple UT0, peut être reliée à un ou plusieurs organes périphériques 89 appropriés. Les calculateurs C0 à Cg — 1 peuvent dialoguer entre eux par canal sémaphore via les matrices 30. Les calculateurs C1 à Cg — 1 ont accès aux périphériques 89 par échange de messages avec C0 ce qui évite d'associer des périphériques à chaque calculateur.

Lorsque l'un des deux calculateurs 71 ou 72 reçoit d'une baie un message dont l'en-tête contient l'adresse du « groupe » 66 (unité de maintenance et d'exploitation), il analyse ce message, et l'aiguille par la matrice qu'il commande vers l'extérieur (C. E. M. C. ou P. T. S.) ou vers l'une des unités de traitement UT0 à UTg — 1 qui assure la (ou les) fonction(s) concernée(s) par le message du canal sémaphore. Parmi ces fonctions connues, on peut citer : observation du trafic, exploitation, essais, gestion, taxation, facturation détaillée, point de signalisation, etc...

On a vu ci-dessus, dans la description de la figure 4, que dans chaque unité de sélection de groupe 22 chacune des matrices 30 est reliée, d'une part à j baies, et d'autre part à k — 1 unités de sélection semblables.

La valeur de j peut être choisie inférieure à celle de k, et ainsi on peut facilement déporter dans un autre bâtiment, qui peut être très éloigné du bâtiment abritant le central en question, toutes ou plusieurs baies d'un groupe sans avoir à déporter leur unité de sélection de groupe. Cette possibilité de déporter des baies est permise grâce à l'utilisation des circuits de synchronisation précités à chaque extrémité de toutes les jonctions interbaies en particulier, comme expliqué dans le brevet français précité 82 00 234. Cette configuration minimise le nombre de faisceaux entre les baies déportées et le reste du central.

Le bloc-diagramme simplifié de la figure 8 permet d'expliquer comment on assure la sécurité des transmissions entre baies de groupes différents en cas de panne d'une unité de sélection de groupe de l'un ou des deux groupes concernés.

Sur cette figure 8 on a seulement représenté deux groupes quelconques G1 et G2 d'un central conforme à l'invention. Dans le groupe G1, on a uniquement représenté une baie B1 et les deux unités de sélection de groupe U11 et U12.

Dans le groupe G2, on a uniquement représenté une baie quelconque B2 et les deux unités de sélection de groupe U21 et U22.

Dans les unités U11, U12, U21, U22, on a uniquement représenté les circuits de commutation de signalisation respectivement référencés C11, C12, C21, C22, les interfaces respectivement référencées I11, I12, I21, I22, les matrices de signalisation (telles que la matrice 29 de la figure 4) respectivement référencées MS11, MS12, MS21, MS22, et les deux premières des matrices de commutation (telles que les matrices M0 à Mr

— 1 de la figure 4) respectivement référencées M111, M112 ; M121, M122 ; M211, M212 ; et M221, M222. On notera que dans chaque groupe les deux matrices de signalisation sont reliées par une jonction bidirectionnelle sur laquelle a été établi un canal sémaphore permanent entre les deux calculateurs concernés (par exemple C11, C12 dans le groupe G1). Bien entendu, il en est de même dans l'unité de maintenance et d'exploitation. Dans chacune des unités de sélection de groupe, on a représenté les liaisons bidirectionnelles entre les interfaces et la matrice de signalisation, et entre la matrice de signalisation et chacune des deux matrices de commutation, et à l'intérieur de chaque groupe on a représenté la liaison entre les deux matrices de signalisation.

Pour assurer la sécurité des transmissions entre les deux groupes, on relie à chaque fois par une liaison MIC bidirectionnelle une matrice impaire (M111) d'une première unité (U11) d'un groupe (G1) à la matrice impaire correspondante (M221) de la seconde unité (U22) de l'autre groupe (G2), et une matrice paire (M112) de la première unité (U11) du premier groupe cité (G1) à la matrice paire correspondante (M212) de la première unité (U21) dudit autre groupe (G2). De même, on relie à chaque fois une matrice impaire (M121) de la seconde unité (U12) du premier groupe cité (G1) à la matrice impaire correspondante (M211) de la première unité (U21) dudit autre groupe (G2), et on relie à chaque fois une matrice paire (M122) de la seconde unité (U12) du premier groupe à une matrice paire correspondante (M222) de la seconde unité (U22) du second groupe. Bien entendu, si l'un des groupes comporte moins de matrices 30 que les autres, ses matrices ne sont reliées qu'à un nombre correspondant de matrices 30 des autres groupes. Ainsi, si par exemple dans le groupe G1 l'unité U11 tombe en panne, la transmission de la signalisation de la baie B1 à la baie B2 passe par U12 grâce à l'unité U21 normalement active. Un canal sémaphore est établi entre U12 et U22 et les messages de signalisation peuvent être répartis entre U22 et U21. Si U22 (ou U21) tombe en panne, les messages seront dirigés vers U21 (ou U22). Ainsi, deux pannes successives quelconques d'unités de sélection de groupe dans deux groupes différents n'empêchent pas l'échange de messages et de parole entre ces deux groupes.

Bien entendu, si les deux unités de sélection de groupe d'un même groupe sont simultanément en panne, ce groupe est isolé des autres groupes, et les baies de ce groupe ne peuvent entrer en contact avec le monde extérieur que grâce aux joncteurs tels que le joncteur 105 (voir figure 1) de chaque baie, si ces joncteurs sont effectivement reliés à d'autres centraux. Dans ce dernier cas, les baies dudit groupe isolé peuvent entrer en contact avec les baies des autres groupes du même central par l'intermédiaire d'un central extérieur, à condition que des baies de ces autres groupes soient aussi munies de joncteurs reliés audit central extérieur.

En conclusion, le central de l'invention exploite au mieux les concepts de modularité et de structure distribuée.

Dans un groupe, on peut rajouter des baies supplémentaires semblables aux baies déjà installées sans avoir à en modifier la structure, la limitation de la taille du groupe étant principalement au nombre de liaisons possibles interbaies ou au nombre maximal de canaux sémaphore que peut traiter ce type de baie.

Quelle que soit la taille du central, on peut rajouter des groupes supplémentaires (dans les limites fixées arbitrairement par le nombre de jonctions bidirectionnelles des unités de sélection de groupe ou par le nombre de canaux sémaphores) sans avoir à modifier la structure des baies des groupes installés et sans addition d'un nouvel organe (de traitement ou de commutation) qui serait commun à plusieurs groupes.

La distribution des fonctions au niveau des premières baies installées demeure inchangée quelle que soit l'extension du central. De même, les liaisons entre baies installés ne sont pas modifiées.

Les liaisons entre baies et unité de sélection de groupe sont optimisées du point de vue du trafic (grâce au choix approprié du nombre de matrices de connexion 30), ce qui permet le déport à distance de baies relatives à un groupe.

En outre, on peut dire que le central de l'invention résulte de la superposition de deux réseaux : un réseau de signalisation interne d'une part, et un réseau de parole d'autre part, ces deux réseaux utilisant les mêmes jonctions et les mêmes matrices de connexion (30).

**Revendications**

1. Central téléphonique numérique modulaire généralisé comportant plusieurs baies autocommutatrices autonomes comprenant chacune en particulier des circuits d'abonnés, des joncteurs BF et MIC, des circuits auxiliaires tels que des générateurs et récepteurs multifréquence, une partie de réseau de connexion réparti, une unité de commande et une unité de signalisation, les baies étant réparties en plusieurs groupes (12, 13, 14, 15) comportant chacun un nombre quelconque de baies (B1 à Bm, B1 à Bn, ou B1 à Bp, B1 à Bq, respectivement), ces baies étant toutes reliées en point à point par jonctions MIC bidirectionnelles à l'intérieur de chaque groupe et les groupes étant reliés entre eux par un ensemble de sélection de groupe assurant les échanges de signalisation et de parole avec les autres groupes, caractérisé par le fait que chaque groupe comporte au moins une unité de sélection de groupe (22) comportant au moins une matrice de commutation (30), et que toutes les unités de sélection de groupe sont reliées entre elles en point à point par jonctions MIC bidirectionnelles.

2. Central téléphonique selon la revendication 1 caractérisé par le fait que l'unité de sélection de groupe (22) comporte en outre un circuit de commutation de signalisation (25), une interface de mémorisation de signalisation d'entrée (27), une interface de mémorisation de signalisation de sortie (26) et un marqueur (28) de commande de la matrice de commutation (30).

3. Central téléphonique selon la revendication 2, caractérisé par le fait que le circuit de commutation de signalisation (25) comporte un calculateur numérique (58) et des mémoires de données et de programme (59), et que les interfaces de mémorisation de signalisation d'entrée (27) et de sortie (26) comportent en commun un calculateur numérique (61) et des mémoires de données, de programme, et tampon (62), et comportent respectivement un circuit logique d'émission (60) et un circuit logique de réception (63).

4. Central téléphonique selon la revendication 1, caractérisé par le fait que chaque baie comporte une alvéole à unité de traitement comportant un matériel de traitement (46 à 48) identique au matériel de traitement (25 à 27) d'une unité de sélection de groupe (22), seul le logiciel étant différent.

5. Central téléphonique selon l'une quelconque des revendications précédentes, caractérisé par le fait que dans chaque groupe les échanges de signalisation inter-baies se font sur un intervalle de temps déterminé des jonctions MIC reliant en point à point les différentes baies de ce groupe, et par le fait que les échanges de signalisation entre baies de groupes différents passent tous par l'unité de sélection de groupe de chacun des groupes concernés et se font sur un autre intervalle de temps déterminé.

6. Central téléphonique selon l'une quelconque des revendications 2 à 5 dans lequel chaque unité de sélection de groupe comporte plusieurs matrices de commutation (30), caractérisé par le fait qu'il comporte en outre une matrice de signalisation (29) reliée par jonctions bidirectionnelles à chacune de ces matrices de commutation, seule la matrice de signalisation étant reliée (31, 32) aux interfaces de mémorisation de signalisation (26, 27), les matrices de commutation étant d'autre part reliées chacune à chacune des baies de son groupe et à chacune des unités de sélection de groupe du central.

7. Central téléphonique selon la revendication 6, dans lequel chaque groupe (G1, G2) comporte deux unités de sélection de groupe (U11, U12, U21, U22), caractérisé par le fait que les matrices de signalisation (MS11, MS12) des deux unités de chaque groupe (U11, U12) sont reliées entre elles par une jonction bidirectionnelle sur laquelle a été établi un canal sémaphore permanent entre les deux calculateurs concernés (C11, C12), et par le fait que les groupes étant pris deux à deux, on relie à chaque fois par une liaison MIC bidirectionnelle une matrice impaire (M111) d'une première unité (U11) d'un groupe (G1) à la matrice impaire correspondante (M221) de la seconde unité (U22) de l'autre groupe (G2), et une matrice paire (M112) de la première unité (U11) du premier groupe cité (G1) à la matrice paire correspondante (M212) de la première unité (U21) dudit autre groupe (G2), que l'on relie à chaque fois une matrice impaire (M121) de la seconde unité (U12) du premier groupe cité (G1) à la matrice impaire correspondante (M211) de la première unité (U21) dudit autre groupe (G2), et que l'on relie à chaque fois une matrice paire (M122) de la seconde unité (U12) du premier groupe à une matrice paire correspondante (M222) de la seconde unité (U22) dudit autre groupe.

8. Central téléphonique selon l'une quelconque des revendications précédentes, caractérisé par le fait qu'il comporte une unité de maintenance et d'exploitation (66) comprenant au moins une unité de sélection de groupe (67, 68) reliée par jonctions MIC bidirectionnelles à chacun des groupes de baies d'abonnés et de joncteurs du central, et au moins une unité de traitement (UT0) reliée à au moins un organe périphérique (89).

9. Central téléphonique selon la revendication 8, et comportant dans son unité de sélection de groupe une matrice de signalisation (29), caractérisé par le fait que cette matrice de signalisation est reliée à un centre d'exploitation et de maintenance centralisées (C.E.M.C.).

10. Central téléphonique selon l'une quelconque des revendications 6 à 8, comportant au moins une matrice de connexion (30) et, le cas échéant une matrice de signalisation (29) de capacité inférieure ou égale à $n \times 8$ jonctions bidirectionnelles, mais supérieure à $(n-1) \times 8$ jonctions, caractérisé par le fait que cette matrice comporte n rangées de n matrices élémentaires (m1 à m9), du type matrice temporelle symétrique pour huit jonctions bidirectionnelles, dont les entrées sont reliées, selon une loi de permutation circulaire, à des arrivées de chacun des sous-ensembles de huit jonctions (j0 à j7, etc...) chacune des matrices d'une rangée étant reliée à un groupe différent, les premières matrices des rangées étant reliées, dans l'ordre des rangées (34, 35, 36), aux sous-ensembles de jonctions pris dans l'ordre (j0 à j7, j8 à j15 et j16 à j23), l'arrivée de la première jonction de chaque groupe (j0, j8, j16) étant reliée à une première entrée d'une porte ET (37 à 39), les secondes entrées de toutes les portes ET étant reliées à un générateur produisant un signal d'inhibition pendant tout l'intervalle de temps nº 0 de chaque trame transmise par lesdites jonctions bidirectionnelles, et les sorties des portes ET étant reliées aux entrées correspondantes des matrices relatives aux groupes considérés, les sorties des matrices élémentaires étant reliées, pour chaque rangée, via des circuits OU (41, 42) aux départs des jonctions bidirectionnelles dont les arrivées sont reliées aux entrées de la première matrice de la rangée considérée, départs pris dans le même ordre que les sorties des matrices élémentaires, chaque rangée comportant en outre un module de sélection logique connu en soi.

**Claims**

1. A general use modular digital telephone exchange comprising several autonomous switching bays each comprising in particular subscriber circuits, low frequency and PCM junctors, auxiliary circuits such as multifrequency generators and receivers, a portion of the distributed connecting network, a control unit and a signalisation unit, the bays being subdivided in several groups (12, 13, 14, 15) each comprising any number of bays (B1 to Bm, B1 to Bn or respectively B1 to Bp, B1 to Bq), these bays all being connected in point to point relationship by bidirectional PCM junctions inside each group, whereas the groups are mutually connected by a group selection assembly ensuring the exchanges of signalisation and speech with the other groups, characterized in that each group comprises at least one group selection unit (22) including at least one switching matrix (30), and that all the group selection units are interconnected in a point to point relationship by bidirectional PCM junctions.

2. A telephone exchange according to claim 1, characterized in that the group selection unit (22) further comprises a signalisation commutation circuit (25), an interface for storing the input signalisation (27), an interface for storing the output signalisation (26) and a marker (28) for controlling the switching matrix (30).

3. A telephone exchange according to claim 2, characterized in that the signalisation commutation circuit (25) comprises a digital computer (58) and data and program memories (59) and that the interfaces for storing the input and output signalisation (27, 26) comprise together one digital computer (61) and data, program and buffer memories (62) and comprise respectively a logic transmission circuit (60) and a logic reception circuit (62).

4. A telephone exchange according to claim 1, characterized in that each bay comprises a case with a processing unit including a processing hardware (46 to 48) indentical to the processing hardware (25 to 27) of a group selection unit (22), only the software being different.

5. A telephone exchange according to any one of the preceding claims, characterized in that in each group, the signalisation exchanges between bays are performed in a predetermined time interval of the PCM junctions interconnecting in a point to point relationship the different bays of this group, and that the signalisation exchanges between bays of different groups all transit *via* the group selection unit of each one of the concerned groups and are executed on another predetermined time interval.

6. A telephone exchange according to any one of claims 2 to 5, in which each group selection unit comprises several switching matrices (30), characterized in that it further comprises a signalisation matrix (29) connected by bidirectional junctions to each one of the switching matrices, only the signalisation matrix being connected (31, 32) to the interfaces for storing the signalisation (26, 27), each one of the switching matrices being connected on the other hand to each of the bays of its group and to each of the group selection units of the telephone exchange.

7. A telephone exchange according to claim 6, in which each group (G1, G2) comprises two group selection units (U11, U12, U21, U22), characterized in that the signalisation matrices (MS11, MS12) of the two units of each group (U11, U12) are interconnected by a bidirectional junction on which a permanent semaphore channel between the two concerned computers (C11, C12) has been established, and that the groups being taken pairwise, at each time an odd matrix (M111) of a first unit (U11) of a first group (G1) is connected *via* a bidirectional PCM connection to the corresponding odd matrix (M221) of the second unit (U22) of the other group (G2), and an even matrix (M112) of the first unit (U11) of said first group (G1) is connected to the corresponding even matrix (M212) of the first unit (U21) of said other group (G2), that each time an odd matrix (M121) of the second unit (U12) of said first group (G1) is connected to the corresponding odd matrix (M211) of the first unit (U21) of said other group (G2), and that each time an even matrix (M122) of the second unit (U12) of the first group is connected to the corresponding even matrix (M222) of the second unit (U22) of said other group.

8. A telephone exchange according to any one of the preceding claims, characterized in that it comprises a maintenance and exploration unit (66) comprising at least one group selection unit (67, 68) connected *via* bidirectional PCM junctions to each one of subscriber group bays and of the junctors of the telephone exchange, and comprises at least one processing unit (UT0) connected to at least one peripheral device (89).

9. A telephone exchange according to claim 8 and comprising in its group selection unit a signalisation matrix (29), characterized in that said signalisation matrix is connected to a centralized exploitation and maintenance center (C.E.M.C.).

10. A telephone exchange according to any one of claims 6 to 8, comprising at least one connection matrix and possibly a signalisation matrix (29) of a capacity which is lower or equal to n · 8 bidirectional junctions, but superior to (n — 1) 8 junctions, characterized in that said matrix comprises n lines of n elementary matrices (m1 to m9) of the symmetric time division matrix type for eight bidirectional junctions, the inputs of which are connected according to a cyclic permutation law to arrivals of each one of the subsets of eight junctions (j0 to j7 and so on), each one of the matrices of one line being connected to a different group respectively, the first matrices of the lines being connected according to the order of lines (34, 35, 36) to the junction subsets taken according to the order (j0 to j7, j8 to j15, j16 to j23), the arrival of the first junction of each group (j0, j8, j16) being connected to a first input of an AND gate (37 to 39), the second inputs of all the AND gates being connected to a generator producing an inhibition signal during the entire time interval number 0 of each frame transmitted by said bidirectional junctions, and that the outputs of the AND gates are connected to corresponding inputs of the matrices relating to the considered groups, the outputs of the elementary matrices being connected, for each line, *via* OR circuits (41, 42) to the outlets of the bidirectional junctions the arrivals of which are connected to the inputs of the first considered matrix, the outlets being taken according to the same order as the outputs of the elementary matrices, each line further comprising a logic selection module, known per se.

**Patentansprüche**

1. Allgemein verwendbare, modulare und digitale Telefonzentrale mit mehreren autonomen Selbstwähleinschüben, die je insbesondere Teilnehmerkreise, Niederfrequenz- und PCM-Anschlüsse, Hilfskreise wie Vielfachfrequenzgeneratoren und- empfänger, einen Teil des verteilten Vermittlungsnetzes, eine Steuereinheit und eine Signalisationseinheit aufweisen, wobei die Einschübe in mehrere Gruppen (12, 13, 14, 15) eingeteilt sind, die je eine beliebige Anzahl von Einschüben (B1 bis Bm, B1 bis Bn, oder B1 bis Bp bzw. B1 bis Bq) umfassen, die alle von Punkt zu Punkt über bidirektionale PCM-Verbindungen innerhalb jeder Gruppe verbunden sind, während die Gruppen miteinander über eine Gruppenselektionsanordnung verbunden sind, die den Austausch von Signalisations- und Sprachsignalen mit anderen Gruppen übernehmen, dadurch gekennzeichnet, daß jede Gruppe mindestens eine Gruppenselektionseinheit (22) mit mindestens einer Schaltmatrix (30) besitzt und daß alle Gruppenselektionseinheiten untereinander von Punkt zu Punkt über bidirektionale PCM-Verbindungen verknüpft sind.

2. Telefonzentrale nach Anspruch 1, dadurch gekennzeichnet, daß die Gruppenselektionseinheit (22) außerdem einen Signalisationsumschaltkreis (25), eine Schnittstelle (27) für die Speicherung der ankommenden Signalisation, eine Schnittstelle (26) für die Speicherung der abgehenden Signalisation (26) und einen Markierer (28) für die Steuerung der Schaltmatrix (30) aufweist.

3. Telefonzentrale nach Anspruch 2, dadurch gekennzeichnet, daß der Signalisationsumschaltkreis (25) einen Digitalrechner (58) und Daten- und Programmspeicher (59) aufweist, und daß die Schnittstellen zur Speicherung der ankommenden und abgehenden Signalisation (27, 26) gemeinsam einen Digitalrechner (61) und Daten-, Programm- und Pufferspeicher (62) sowie einen logischen Sendekreis (60) und einen logischen Empfangskreis (63) aufweisen.

4. Telefonzentrale nach Anspruch 1, dadurch gekennzeichnet, daß jeder Einschub ein Fach mit einer Bearbeitungseinheit besitzt, das eine Bearbeitungshardware (46 bis 48) gleich der (25 bis 27) einer Gruppenselektionseinheit (22) enthält, wobei nur die Software unterschiedlich ist.

5. Telefonzentrale nach einem beliebigen der vorhergehenden Ansprüche, dadurch gekennzeichnet, daß in jeder Gruppe die Signalisationsaustauschvorgänge zwischen den Einschüben in einem gegebenen Zeitintervall der PCM-Verbindungen erfolgen, die von Punkt zu Punkt die verschiedenen Einschübe dieser Gruppe miteinander verbinden, und daß die Signalisationsaustauschvorgänge zwischen Einschüben unterschiedlicher Gruppe alle über die Gruppenselektionseinheit jeder der betroffenen Gruppen und in einem anderen vorgegebenen Zeitintervall ablaufen.

6. Telefonzentrale nach einem beliebigen der Ansprüche 2 bis 5, in der jede Gruppenselektionseinheit mehrere Schaltmatrizen (30) aufweist, dadurch gekennzeichnet, daß außerdem eine Signalisationsmatrix (29) vorgesehen ist, die über bidirektionale Verbindungen an jede dieser Schaltmatrizen angeschlossen ist, wobei nur die Signalisationsmatrix an die Schnittstellen zur Speicherung der Signalisation (26, 27) angeschlossen ist (31, 32) und die Schaltmatrizen andererseits je mit jedem Einschub ihrer Gruppe und jeder der Gruppenselektionseinheiten der Telefonzentrale verbunden sind.

7. Telefonzentrale nach Anspruch 6, in der jede Gruppe (G1, G2) zwei Gruppenselektionseinheiten (U11, U12, U21, U22) aufweist, dadurch gekennzeichnet, daß die Signalisationsmatrizen (MS11, MS12) der beiden Einheiten jeder Gruppe (U11, U12) untereinander über eine bidirektionale Verbindung verbunden sind, auf der ein permanenter Signalkanal zwischen den beiden betroffenen Rechnern (C11, C12) hergestellt wurde, und daß die Gruppen paarweise vorliegen und jedesmal über eine bidirektionale PCM-Verbindung eine ungerade Matrix (M111) einer ersten Einheit (U11) einer ersten Gruppe (G1) an die entsprechende ungerade Matrix (M221) der zweiten Einheit (U22) der anderen Gruppe (G2) sowie eine gerade Matrix (M112) der ersten Einheit (U11) der genannten ersten Gruppe (G1) an die entsprechende gerade Matrix (212) der ersten Einheit (U21) der anderen Gruppe (G2) angeschlossen sind, daß jedesmal eine ungerade Matrix (M121) der zweiten Einheit (U12) der ersten genannten Gruppe (G1) an die entsprechende ungerade Matrix (M211) der ersten Einheit (U21) der genannten anderen Gruppe (G2) angeschlossen ist, und daß jedesmal eine gerade Matrix (M122) der zweiten Einheit (U12) der ersten Gruppe an eine entsprechende gerade Matrix (M222) der zweiten Einheit (U22) der genannten anderen Gruppe angeschlossen ist.

8. Telefonzentrale nach einem beliebigen der vorhergehenden Ansprüche, dadurch gekennzeichnet, daß eine Wartungs- und Auswerteeinheit (66) vorgesehen ist, die mindestens eine Gruppenauswahleinheit (67, 68), die über bidirektionale PCM-Verbindungen an jede der Gruppen von Teilnehmereinschüben und von Verbindungseinschüben der Zentrale angeschlossen sind, und mindestens eine Verarbeitungseinheit (UT0) auf-

weist, die an mindestens ein peripheres Organ (89) angeschlossen ist.

9. Telefonzentrale nach Anspruch 8 mit einer Signalisationsmatrix (29) in ihrer Gruppenselektionseinheit, dadurch gekennzeichnet, daß diese Signalisationsmatrix an eine zentralisierte Auswerte- und Wartungszentrale (C.E.M.C.) angeschlossen ist.

10. Telefonzentrale nach einem beliebigen der Ansprüche 6 bis 8 mit mindestens einer Anschlußmatrix (30) und ggfs. einer Signalisationsmatrix (29) einer Kapazität kleiner-gleich n.8 bidirektionalen Verbindungen, aber größer als $(n-1)$ 8 Verbindungen, dadurch gekennzeichnet, daß diese Matrix n Reihen von n Elementarmatrizen (m1 bis m9) vom symmetrischen Zeitmultiplexmatrixtyp für acht bidirektionale Verbindungen besitzt, deren Eingänge gemäß einem zyklischen Permutationsgesetz an Anschlüsse jeder der Untergruppen von acht Verbindungen (j0 bis j7, usw. ...) angeschlossen sind, wobei jede der Matrizen einer Reihe an eine andere Gruppe angeschlossen ist und die ersten Matrizen der Reihe in der Reihenfolge der Reihen (34, 35, 36) an die Untergruppen von Verbindungen in der Reihenfolge (j0 bis j7, j8 bis j15, j16 bis j23) angeschlossen sind und der Anschluß der ersten Verbindung jeder Gruppe (j0, j8, j16) an einen ersten Eingang eines UND-Tores (37 bis 39) angeschlossen ist, während die zweiten Eingänge aller UND-Tore an einen Generator angeschlossen sind, der ein Sperrsignal während des ganzen Zeitintervalls 0 jedes von diesen bidirektionalen Verbindungen übertragenen Rahmens erzeugt, und wobei die Ausgänge der UNDTore an entsprechende Eingänge der auf die betroffenen Gruppen bezogenen Matrizen angeschlossen sind, und daß die Ausgänge der Elementarmatrizen für jede Reihe über ODER-Kreise (41, 42) auf die Abgänge der bidirektionalen Verbindungen geschaltet sind, deren Eingänge an die Eingänge der ersten Matrix der betroffenen Reihe angeschlossen sind, wobei die Abgänge in derselben Reihenfolge wie die Ausgänge der Elementarmatrizen geordnet sind und jede Reihe außerdem einen an sich bekannten logischen Selektionsmodul aufweist.

Fig.1

VERS
AUTRES
CENTRAUX

VERS
ABONNÉS

LIAISONS
INTER-BAIES

0 091 362

Fig. 2

Fig.3

Fig. 4

Fig.5

0 091 362

Fig.6

Fig.7

Fig. 8